# EUROPEAN PATENT APPLICATION

(11) **EP 4 299 680 A1**
(43) Date of publication of application: **03.01.2024**
(21) Application number: 22181895.8
(22) Date of filing: 29.06.2022
(51) Int. Cl.: C09D 5/00, C09D 5/34, C09D 7/61, C09D 7/65, C09K 3/12, C09J 7/32, C09J 11/08, C04B 24/00

(54) **QUICK SETTING AQUEOUS COMPOSITION COMPRISING POLYELECTROLYTE COACERVATES AND POLYPHENOLS**

(71) Applicant: Saint-Gobain Weber France, 94370 Sucy en Brie (FR)
(72) Inventor: CEDANO SERRANO, Francisco Javier, 75017 PARIS (FR)
(74) Representative: Saint-Gobain Recherche

(57) **Abstract**

The present invention is drawn to an adhesive or binder composition comprising,
- a cationic polyelectrolyte,
- an anionic polyelectrolyte,
- a mineral salt selected from the group consisting of alkaline metal or alkaline earth metal halogenides,
- a particulate mineral filler,
- a water-soluble polyphenol comprising at least one polyhydroxylated aromatic ring structure, and
- water

It is also drawn to the use of such a composition as an adhesive, binder, coating or sealant in the construction industry.

## Description

The present invention is drawn to aqueous quick setting compositions based on polyelectrolyte coacervates and polyphenols.

The construction sector is always in demand of low-cost, water-based, one-component, versatile, low-temperature setting compositions to be used as binders, adhesives and/or sealants. The possibility to use such compositions in humid environments or even in under-water applications would be very interesting. Last but not least, in view of the constantly increasing sustainability challenges the recyclability of construction materials is an aspect of growing importance.

Unfortunately, to the best knowledge of the applicants, no compositions fulfilling all the above criteria are commercially available up to now.

In search of such new materials for the construction industry, the inventors have considered to adapt and improve adhesive compositions, used primarily in the bio-medical field, based on a combination of organic polyelectrolytes of opposite charges.

When an aqueous solution of an anionic polyelectrolyte (also called hereafter "polyanion") and an aqueous solution of a cationic polyelectrolyte (also called hereafter "polycation") are mixed together, the polyelectrolytes will immediately associate and form a solid complex (polyelectrolyte complex) that will separate from the aqueous phase. When the aqueous polymer solutions contain water-soluble salts in a sufficient amount to at least partially screen the opposite charges of the polymers, the attraction between the polyanion and polycation will be reduced and formation of a solid complex be prevented. Upon mixing of the solutions, one will however observe phase separation with, on the one hand, a concentrated polymer-rich phase, called "coacervate", and, on the other hand, a polymer-depleted supernatant phase. A detailed description of this phenomenon can be found for example in Wang et al, "The Polyelectrolyte Complex/Coacervate Continuum", Macromolecules, 2014, 47, 3108-3116. Such polyelectrolyte coacervates or polyelectrolyte complexes will be referred to hereafter as PEC (PolyElectrolyte Complex/Coacervate). The rapid transition of viscous polyelectrolyte coacervates to solid polyelectrolyte complexes upon contact with water allows efficient and immediate setting of the composition at room temperature and in humid environments, without any need for chemical curing agents or energy input. On the other hand, solid polyelectrolyte complexes can easily be "dissolved" and recycled by contacting them with aqueous solutions of high ionic strength.

Description of PEC-based adhesive compositions and their use in the biomedical field can be found for example in the following international applications: WO2011/149907A1, WO2011/106595, WO2012/065148, WO2016/011028, WO2019/172764.

The objective of the present invention was to provide such PEC-based compositions adapted to be used as binders, sealants and/or adhesives in the construction industry.

When trying to use polyelectrolyte coacervates - comprising an anionic polyelectrolyte, a cationic polyelectrolyte, and a charge-screening salt dissolved in water - to prepare binders, sealants or adhesive for the construction industry, the inventors were confronted with the problem of insufficient mechanical strength of the final product.

They first added a significant amount of particulate filler to the coacervates in order to both increase the mechanical strength and lower the production costs. The result however was not completely satisfactory since the material still suffered from excessive brittleness.

The present invention is based on the discovery that the mechanical performances of a PEC-based material may be significantly improved by addition of a water-soluble polyphenol to the aqueous coacervate. The polyphenol acts as a reinforcing agent and its efficiency is improved when associated with very low amounts of polyvalent transition metal salts. Without wishing to be bound by theory, the inventors believe that the aromatic hydroxyl groups of the polyphenols reversibly interact with the polyelectrolytes and/or with the transition metal ions thereby introducing additional links into the polymer network and creating a sort of reversible physical crosslinking of the polyelectrolytes.

A first subject-matter of the present application is an aqueous composition comprising,
- a cationic polyelectrolyte,
- an anionic polyelectrolyte,
- a mineral salt selected from the group consisting of alkaline metal or alkaline earth metal halogenides,
- a particulate filler,
- a water-soluble polyphenol comprising at least one polyhydroxylated aromatic ring structure, and
- water.

The aqueous composition of the present invention comprises similar amounts of a cationic polyelectrolyte and an anionic polyelectrolyte, "similar amounts" meaning here that these two types of polyelectrolytes of opposite charges are used in respective amounts such that the ratio of the number of positive charges of the polycation to the number of negative charges on the polyanion is comprised between 0.5 and 2.0, preferably between 0.6 and 1.8, more preferably between 0.7 and 1.6 and still more preferably between 0.8 and 1.4, or even between 0.9 and 1.2.

The term "a cationic polyelectrolyte" encompasses mixtures of two or more cationic polyelectrolytes and the term "an anionic polyelectrolyte" encompasses mixtures of two or more anionic polyelectrolytes.

The polyelectrolytes may be strong or weak polyelectrolytes. A strong polyelectrolyte is a polymer with a net positive or net negative charge that is essentially independent of the pH of the composition. Strong cationic polyelectrolytes are for example polymers comprising a plurality of quaternized amine groups; strong anionic polyelectrolytes are for example polymers comprising a plurality of sulfonate (-SO₃⁻ groups). Poly(acrylic acid) is an example of a weak anionic polyelectrolyte and non-quaternized polyamines are examples of weak cationic polyelectrolytes.

In the present invention an anionic polyelectrolyte is a polymer with a net negative charge at pH 7 and a cationic polyelectrolyte is a polymer with a net positive charge at pH 7. This does not mean that an anionic polyelectrolyte comprises only negative charges and is free of positive charges. By analogy, cationic polyelectrolytes may comprise both cationic and anionic charges as long as at pH 7 there is a clear majority of cationic charges.

Consequently, the definition of anionic polyelectrolytes encompasses zwitterionic polyelectrolytes having an isoelectric point (pl) < 7, preferably < 6, and the definition of cationic polyelectrolytes encompasses zwitterionic polyelectrolytes having an isoelectric point (pl) > 7, preferably > 8. The most commonly known zwitterionic polyelectrolytes are proteins or peptides comprising both pending carboxyl groups (-COOH) and pending amino groups (-NH₂).

In a preferred embodiment of the composition of the present invention the anionic polyelectrolyte comprises only negative charges and is free of positive charges, and the cationic polyelectrolyte comprises only positive charges and is free of negative charges.

The anionic polyelectrolyte and the cationic polyelectrolyte preferably are linear, non-branched polymers.

The cationic groups of the cationic polyelectrolyte are for example primary, secondary, or tertiary amino groups or quaternized amine groups, located in the main chain of the polymer or on pending groups.

The anionic groups of the anionic polyelectrolyte are for example selected from the group consisting of carboxyl, sulphonate, phosphonate, boronate, sulphate, borate, and phosphate groups, located in the main chain of the polymer or on pending groups thereof.

The cationic polyelectrolyte is preferably selected from the group consisting of
- poly(diallyldimethylammonium chloride) (PDADMAC),
- poly[ (2-hydroxypropyl)dimethylammonium chloride],
- polyamidoamine-epichlorhydrine (PAAE),
- polyethyleneimine,
- poly(acrylamide-co-diallyldimethylammonium chloride),
- copolymer of hydroxyethylcellulose and poly(diallyldimethylammonium chloride) (Polyquaternium-4),
- copolymer of acrylamide and dimethylaminoéthylmethacrylate quaternized with dimethyl sulphate (Polyquaternium-5, CAS 26006-22-4),
- copolymer of diméthylaminomethyle methacrylate and alkyl methacrylate
- chitosan,
- poly(quaternized N,N-(dimethylamino)ethyle methacrylate),
- guar hydroxypropyltrimonium chloride,
- poly(N,N-dimethyl-3,5-dimethylene piperidinium chloride),
- poly(vinylbenzyltrimethylammonium chloride),
- poly[3-(methacryloylamino)propyl-trimethylammonium chloride],
- poly([2-(methacryloloxy)ethyl]-trimethylammonium chloride),
- polyvinylamine (PVA),
- poly(N,N-dimethyl-3,5-dimethylene piperidinium chloride) (PDDPC),
- poly(vinylbenzyltrimethylammonium chloride) (PVBTAC),
- poly(allylamine chloride) (PAH),
- poly[3-(methacryloylamino)propyltrimethylammonium chloride] (PMAPTAC), and
- cationic dextran.

The anionic polyelectrolyte preferably is selected from the group consisting of the salts, preferably sodium salts, of poly(acrylic acid), poly(acrylic acid-co-acrylamido), poly(4-styrene-sulfonic acid), lignosulfonic acid, humic acid, alginic acid, poly(2-acrylamido-2-methyl-1-propanesulfonic acid), hyaluronic acid, poly(vinylsulfonic acid), and dextran-sulfate.

The weight average molecular weight (determined by light scattering) of the anionic and cationic polyelectrolytes is typically comprised between 1000 and 2 000 000 Da, preferably between 50 000 and 700 000 Da, more preferably between 100 000 and 400 000 Da.

The anionic polyelectrolyte and cationic polyelectrolyte preferably have similar molar weights. The ratio of the weight average molecular weight of the anionic polyelectrolyte to the weight average molecular weight of the cationic polyelectrolyte is preferably comprised between 0.4 and 1.6, more preferably between 0.7 and 1.3 and still more preferably between 0.8 and 1.2.

The cationic polyelectrolytes and anionic polyelectrolytes together preferably represent from 5 % to 35 %, preferably from 8 % to 30 % of the total weight of the aqueous composition. For very high molecular weight molecular weights the lower limit may be about 1 % by weight of the aqueous composition.

The composition of the present invention further comprises a water-soluble mineral salt selected from the group consisting of alkaline metal or alkaline earth metal halogenides. The function of the mineral salt is to screen the opposite charges and to thereby reduce the ionic interaction between the polyelectrolytes, to prevent the formation of a solid insoluble polyelectrolyte complex and to allow the formation of a coacervate (a viscous polyelectrolyte-rich solution). The mineral salt preferably is a monovalent metal salt, i.e. an alkaline metal halogenide. Alkaline earth metal salts, when present, preferably do not represent more than 20 mole % of the total mineral salts.

The suitable amount of mineral salt depends on the total amount of polyelectrolyte charges, i.e. for a given molecular weight of the polyelectrolytes, it is roughly proportional to the amount of polyelectrolytes in the composition.

The amount of mineral salt selected from the group consisting of alkaline metal or alkaline earth metal halogenides is typically comprised between 40% and 95 % by weight, preferably between 55 % and 75 % by weight, with respect to the total dry weight of cationic polyelectrolyte, anionic electrolyte and mineral salt selected from the group consisting of alkaline metal or alkaline earth metal halogenides.

The weight ratio of the total amount of cationic polyelectrolyte and anionic polyelectrolyte to the total amount of water-soluble mineral salt selected from the group consisting of alkaline metal and alkaline earth metal halogenides, is preferably comprised between 0.10 and 4.0, more between 0.50 and 2.50, and still more preferably between 0.80 and 1.50.

The above amount and ratio may also depend to a certain extent on the molecular weight of the polyelectrolyte. The higher the weight average molecular weight of the polyelectrolytes, the more water-soluble mineral salt will be necessary to achieve a suitably low viscosity of the aqueous composition.

The aqueous composition further comprises a particulate filler as an essential component.

The amount of the particulate filler may vary between large ranges as a function of the specific final use of the composition. The amount of particular filler is generally comprised between 5 % and 80 % by weight, preferably between 10 and 70 % by weight, and more preferably between 15 and 60 % by weight, with respect to the total dry weight of the composition.

The particulate filler may be a mineral filler, preferably a mineral filler selected from calcium carbonate, barium sulfate, clay, talcum, dolomite, mica, silica sand, crushed basalt, kaolin, wollastonite, and laponite.

The mean particle size of the filler is generally comprised between 0.04 and 140 µm, preferably between 0.1 and 10 µm, still more preferably between 0.2 and 5 µm.

Compositions comprising anionic and cationic polyelectrolytes, water, salt and a particulate filler are known in the art and are used as adhesives in the biomedical field (see WO2016/011028).

The compositions of the present invention are different from the ones described in WO2016/011028 by the fact that they further comprise a significant amount of a water-soluble polyphenol.

The polyphenol increases the mechanical strength of the final materials and thus makes them suitable for use in the construction industry where they are submitted to severe mechanical stress and solicitations.

The amount of polyphenol, or polyphenols, should be comprised between 0.02 % and 1.0 % by weight, preferably between 0.03 % and 0.5 % by weight, more preferably between 0.04 % and 0.1 % by weight, with respect to the aqueous ready-for-use composition.

When expressed with respect to the dry weight of the compositions of the present invention, the total amount of polyphenol(s) is comprised between 0.001 % and 0.5 % by weight, preferably between 0.01 and 0.25 % by weight, more preferably between 0.05 and 0.5 % by weight.

The term "polyphenol" refers to an organic compound comprising at least one polyhydroxylated aromatic ring structure, "polyhydroxylated" meaning comprising two hydroxyls on the same aromatic ring. The term "water-soluble" referring to the polyphenol means that its solubility in distilled water at 20 °C is at least 100 g/L.

In a preferred embodiment, at least part of the polyphenols used in the compositions of the present invention comprise more than one polyhydroxylated aromatic ring structure, i.e. at least two, preferably at least three, and more preferably at least four polyhydroxylated aromatic ring structures.

The polyhydroxylated aromatic ring structures are preferably selected from the groups consisting of catechol groups, pyrogallol groups, tetrahydroxylated aromatic ring structures and pentahydroxylated aromatic ring structures.

In a particularly interesting embodiment the polyphenol is tannic acid (CAS n° 1401-55-4), which comprises five trihydroxylated aromatic ring structures. Tannic acid is interesting from an economical point of view. It is a rather cheap, biosourced ingredient comprising a high concentration of polyhydroxylated aromatic ring structures.

Recently, synthetic organic polymers comprising comonomers with polyhydroxylated ring structures have been described (see for example the work of Cheng et al., in Nature Communications, 13, article number 1892 (2022)). This type of polymer of course would also very efficiently reinforce the final seals and adhesives obtained from the composition of the present invention.

In another preferred embodiment of the present invention, the polyphenol associated with the PEC is a synthetic copolymer comprising comonomers with polyhydroxylated ring structures, preferably a copolymer of styrene and of a comonomer selected from dihydroxystyrene, trihydroxystyrene, tetrahydroxystyrene and pentahydroxystyrene.

The mechanical performances of the final construction material may be still more improved by associating the polyphenol-reinforced PEC with polyvalent transition metal ions. In another preferred embodiment, the composition of the present invention therefor further comprises a water-soluble polyvalent transition metal salt or a mixture of polyvalent transition metal salts, preferably in a total amount comprised between 0.001 and 0,1 %, more preferably between 0.005 and 0.05%, with respect to the total weight of the composition.

When expressed with respect to the water-soluble polyphenol, the weight ratio of the transition metal salt to the dry weight of the polyphenol is typically comprised between 0.1 and 0.2, preferably between 0.12 and 0.18.

The transition metals are preferably selected from the group consisting of Fe, Zn, Co, Cu, and V. Halogenides, in particular chlorides and bromides, are preferred anions of the reinforcing transition metal salts used in the present invention.

The composition of the present invention further may comprise significant amounts of "soft", water-insoluble organic polymer particles having glass transition temperatures below room temperature, preferably below 0°C. The addition of such soft organic polymers improves impact resistance and helps to prevent cracking of the final cured material.

The organic polymer preferably is selected from acrylic polymers, styrene-acrylic polymers, styrene-butadiene polymers, chloroprene, natural rubber and polyurethanes. The dry weight ratio of the amount of organic polymer particles to the total amount of cationic and anionic polyelectrolytes typically is comprised between 0.5/1 and 5/1, preferably between 0.7/1 and 3/1, more preferably between 1/1 and 2/1.

The organic polymer particles are generally commercialized as aqueous dispersions. When adding such aqueous dispersions as an ingredient to the compositions of the present invention, the skilled person may be confronted with undesirable solidification of the PEC due to locally insufficient ionic strength (dilution by the aqueous phase of the polymer dispersions). This difficulty may sometimes be overcome by first dissolving a sufficient amount of water-soluble mineral salt in the aqueous phase of the polymer dispersion. In some cases, addition of mineral salts however may trigger destabilization and coagulation of the polymer dispersion. Addition of non-ionic surfactant for example may prevent this phenomenon.

If, for some reason, addition of mineral salts to the polymer dispersion prior to mixing it with the PEC turns out to be impossible or too complicated at industrial scale, redispersible polymer powders may advantageously be used instead of aqueous polymer dispersions. Such solvent-free dispersible powders of organic polymer particles are commercialized for example under the references Vinnapas^{®} 7150 E, Vinnapas^{®} 7055 E, Vinnapas^{®} 3030H by Wacker, and ELOTEX^{®} FX2630 by Celanese.

The water-resistance and water-impermeability of the construction materials prepared from the aqueous composition of the present invention may be improved by addition of a hydrophobic agent, typically added as an emulsion. The hydrophobic additive may be a wax, for example paraffin wax, polyethylene wax, polypropylene wax, silicone wax and poly(tetrafluoroethylene) wax. Hydrophobic resins, for example hydrophobic silicone resins such as Variphob^{®} AC 3030, may also efficiently be used as hydrophobic additives.

The hydrophobic additive is typically used in amounts up to 15 % by weight, preferable comprised between 1 % and 15 % by weight, more preferably between 2 and 10 % by weight, and still more preferably between 3 and 5 % by weight, with respect to the total dry weight of the composition.

The composition may further comprise up to about 20 %, preferably from 0.1 to about 10 % of one or more additives different from the ones mentioned above. Those additives are selected for examples from the group consisting of cosolvents such as ethanol and polyethyleneglycol, dyes, pigments, biocides, buffer agents, surfactants, dispersants and thickening agents.

It may also be interesting to add alkyd resins, preferably short chain alkyd resins, to the compositions of the present invention. The alkyd resins are preferably introduced as aqueous emulsions. The amount of alkyd resins may be comprised between 1 % and 15 % by weight with respect to the dry weight of the composition.

The compositions of the present invention may be prepared by first dissolving each of the cationic and anionic polyelectrolytes separately in an aqueous solution of the mineral salt selected from alkaline metal and alkaline earth metal salts. The salt concentration is typically comprised between 0.05M and 6 M, preferably between 0.2 and 2.5 M, and more preferably between 0.5 and 2.0 M. The higher the molecular weight of the polyelectrolyte, the higher must be the ionic strength of the salt solution. Hence, for weight average molecular weights of less than 100 000 Da, salt concentrations of between 0.2 and 1 M should be sufficient. For dissolving polyelectrolytes with weight average molecular weights above 400 000, salt concentration of more than 1.8 M will be required.

The pH of both polyelectrolyte solutions is advantageously acidic, preferably around pH 1.

After complete dissolution of the polyelectrolytes, the two solutions are simply mixed together. A polymer-rich dense phase, called coacervate, will separate from a polymer-depleted surfactant phase. The two phases can be easily separated, optionally after centrifugation of the mixture.

When working at an industrial scale, it is of course interesting to minimize the volume fraction of the supernatant phase. This can be done by increasing the polyelectrolyte concentration and salt concentration in the two solutions prior to mixing. It is very important to always remove the supernatant after phase separation otherwise the composition will not cure after contact with water.

The solid fraction of the coacervate (polyelectrolytes and mineral salt) is typically comprised between 20 and 35 % by weight, preferably between 25 and 30 % by weight.

The polyphenols are preferably added to the cationic polyelectrolyte solution, prior to or after dissolving the polycation. Addition of the polyphenols to the polyanion solution lead to undesirable gelation of the solution. The polyphenols may be added as such, in non-diluted form or may first be dissolved in an aqueous solution of the mineral salt.

The water-soluble salt of a transition metal is preferably added to the solution comprising the cationic polyelectrolyte and the polyphenol, in powder form or as an aqueous solution.

The particulate filler and the other ingredients, such as the optional organic polymer particles, hydrophobic agent, and other additives are typically added to the coacervate after removal of the supernatant. They may be introduced either in dry form or dispersed or dissolved in an aqueous salt solution having an ionic strength similar to that of the coacervate.

If desired, pH of the composition may be neutralized to pH 5 - 9, preferably pH 6 - 8, after or before addition of the particulate filler and the other optional ingredients.

The final ready-for-use composition of the present invention typically has a water content of from 15 to 80 %, preferably of from 20 to 75 %, more preferably of from 25 to 70 % by weight.

The aqueous compositions of the present invention comprising PEC, a particulate filler and a polyphenol reinforcing agent are monocomponent (1K) compositions. They have unlimited shelf life and rapidly cure when coming into contact with water. They are solvent-free and may be used in humid environments. They may have a pasty or liquid consistency. Their viscosity is easily reduced by dilution with aqueous solutions of a water-soluble mineral salt such as NaCl or KBr.

Thanks to the above features they are versatile in use and may be applied as fluid waterproof membranes on porous substrates which are not necessarily dried before application, as a plastic filler for repairing holes or cracks, even under-water, especially sea water, as protective paints or coatings etc.

More specifically another subject-matter of the present application is a method of waterproofing a support, said method comprising the following successive steps:
- coating the support with a liquid composition as described above, for example with a roller or a brush, thereby forming a liquid coating layer,
- applying water to the liquid coating layer, thereby instantly hardening the liquid coating layer by dissolving the mineral salt from the liquid coating layer,
- optionally removing the excess water with dissolved mineral salt from the hardened coating layer, and
- drying the hardened coating layer.

Another subject-matter of the present application is method for repairing an underwater leakage due to an opening in a separation between two compartments separated by a wall. This method simply comprises completely filling the opening in the wall with a composition according the present invention, and contacting the composition with water, either after or during the filling of the opening with the composition. The water is not necessarily tap water or distilled water but may be sea water having lower ionic strength than the aqueous phase of the composition.

Still another subject-matter of the present application is a method of underwater gluing two substrates together, said method comprising injecting a liquid composition such as described above in a space between two immerged substrates that are to be adhered to each other. Complete curing of the adhesive may take several hours or days and depends on the surface where the composition is in contact with the surrounding water.

Still another subject matter of the present application is a method of underwater gluing two substrates together, said method comprising applying a composition as described above onto a surface of a first substrate and then pressing the surface with the composition against an immerged second substrate. When implementing this method, one should seek to minimize the time the adhesive composition is in contact with the surrounding water before application to the immerged second substrate.

### Example 1

Reinforcing effect of polyphenols and polyphenols/transition metals on the mechanical strength of PEC

### Preparation of comparative Composition A:

To 107.5 g of water 5 mL of HCI (1M) are added and then 85.7 g KBr are dissolved. To the acidic salt solution 349.6 g of Floset^{®} EVA 462 (from SNF, France) are added (PDADMAC, about 20 %).

To 177.3 g of water 5 mL of HCI (1M) are added and then 85.6 g KBR are dissolved. 300.2 g of Versal^{®} TL 130 (from Nouryon) are added (PSS about 30 % solids).

After complete dissolution of the polyelectrolytes (PDADMAC and PSS) the PSS solution was poured into the PDADMAC solution under high shear. The mixture was left for a few minutes at rest and phase separation occurred. The supernatant was removed.

### Preparation of Composition B (according to the invention):

Composition B was prepared as described above for Composition A except that 0.7 g of tannic acid was added to the first solution before dissolving PDADMAC (approximate weight ratio of tannic acid to cationic polyelectrolyte 1 %).

### Preparation of Composition C (according to the invention):

Composition C was prepared as described above for Composition A except that 1.7 g of tannic acid was added to the first solution before dissolving PDADMAC (approximate weight ratio of tannic acid to cationic polyelectrolyte 2.5 %).

### Preparation of Composition D (according to the invention):

Composition D was prepared as described above for Composition B, except that FeCl₃ was added to the PDADMAC-tannic acid solution in an amount such that the weight ratio of tannic acid to FeCl₃ was 6.

### Preparation of Composition E (according to the invention):

Composition E was prepared as described above for Composition C, except that FeCl₃ was added to the PDADMAC-tannic acid solution in an amount such that the weight ratio of tannic acid to FeCl₃ was 6.

To assess the reinforcement effect of the polyphenol (tannic acid) and of the association polyphenol/polyvalent transition metal (FeCl₃), lap shear tests were carried out on adhesives applied between two glass slides.

0.1 g of each Composition A - E was applied at the end of a glass slide (2.5 x 8.0 x 0.21 cm). Another glass slide having identical dimensions was applied to the first glass substrate with an overlap zone of 1.5 x 2.5 cm where the two glass slides were adhered to each other by the Composition A, B, C, D or E.

The substrates were then immersed for about 5 days in tap water at room temperature to effect curing of the adhesive.

Lap shear tests were then carried out in an Instron machine at a traction speed of 1.3 mm/min and the maximum strength at break (peak force/overlap area), elongation at maximum strength (%) and toughness (area under the force-displacement curve/overlap area) were measured.

**Table 1**

| Composition | Maximum strength at break (kPa) | Elongation at max strength (%) | Toughness (kJ/m²) |
|---|---|---|---|
| A (comparative) | 45.0 | 5.5 | 59.8 |
| B (invention) | 53.7 | 7.0 | 80.2 |
| C (invention) | 49.6 | 7.5 | 88.9 |
| D (invention) | 162.5 | 5.9 | 168.6 |
| E (invention) | 59.5 | 8.3 | 100.8 |

One can see that addition of rather low amounts of a polyphenol (tannic acid) significantly increases the toughness of the cured PEC material, reflecting the increase of energy dissipated before break.

The reinforcement effect is even more spectacular when the polyphenol is associated with FeCl₃.

It is interesting to note that the most performant adhesive is not Composition E comprising the highest amount of polyphenol (2.5 % with respect to PDADMAC) but Composition D comprising a lower amount of tannic acid (1 % with respect to PDADMAC) and Fe³⁺ ions.

### Example 2

### Preparation of a quick setting flexible water-proof membrane

A coacervate reinforced with polyphenols and FeCl₃ was first prepared as follows :
A PADMAC solution was prepared by dissolving 349.6 g of Floset EVA 462 (SNF) in a mixture of 107.5 g water, 5 mL HCI (1M), 85.7g KBr and 0.7 g tannic acid. 0.117 g of FeCl₃ was then dissolved.

A PSS solution was prepared by dissolving 300.2 g Versal TL 130 (Nouryon) in a mixture of 177.3 g water, 5 mL of HCI (1M), and 85.6 g KBr.

After complete dissolution of the polyelectrolytes (PDADMAC and PSS) the PSS solution was poured into the PDADMAC solution under high shear. The mixture was left for a few minutes at rest and phase separation (coacervation) occurred. The supernatant was removed.

70 g of the resulting coacervate were then mixed with a powdery composition of mineral fillers comprising 23.4 g CaCO₃ (CalPlex 5), 1.0 g kaolin (Dorkafill Pro_Void), 33 g BaSO₄ (Schwerspat C14, from Silo), 0.35 g methylcellulose (Walocel MT 10000 PV), 0.48 antifoaming additive (Agitan 350), 0.04 g dispersant (Disperbyk), and 2.5 g water.

To 64 g of the resulting composition were finally added 21.6 g of Vinnapas^{®} 7150 E (dispersible organic polymer from Wacker), 5.2 g of Axilat PSB-150 and 3.3 g of WVC3800 (plasticizer) and 3.3 g of Variphob AC 3030 (hydrophobic agent from CHT).

Mixing with an overhead stirrer (1500 rpm) led to a formulation that was used as a water-proof membrane.

A uniform layer (about 500 g/m²) of the resulting formulation was applied by means of a roller, brush or trowel onto a concrete support. Spraying of tap water to the layer resulted in immediate curing of the composition. Excess water was removed by means of a tissue. A second layer (about 600 g/m²) of the formulation was applied directly and immediately to the first layer and sprayed with tap water. After removal of excess water, the resulting layer formed a water-proof membrane of about 1 mm that was immediately be covered with tiles, without the need to first let it dry.

## Claims

1. A composition comprising,
- A cationic polyelectrolyte,
- An anionic polyelectrolyte,
- A mineral salt selected from the group consisting of alkaline metal or alkaline earth metal halogenides,
- A particulate filler,
- A water-soluble polyphenol comprising at least one polyhydroxylated aromatic ring structure, and
- water.

2. The composition according to claim 1, further comprising a water-soluble polyvalent transition metal salt, preferably in an amount comprised between 0.001 and 0,1 %, more preferably between 0.005 and 0.05%, with respect to the total weight of the composition.

3. The composition according to claim 1 or 2, wherein the transition metal is selected from Fe, Zn, Co, Cu, and V.

4. The composition according to any of the preceding claims, wherein the ratio of the number of positive charges of the cationic polyelectrolyte to the number of negative charges of the anionic polyelectrolyte is comprised between 0.5 and 2.0, preferably between 0.6 and 1.8.

5. The composition according to any of the preceding claims, wherein the cationic and anionic polyelectrolytes together represent from 5 % to 35 %, preferably from 8 % to 30 % of the total weight of the composition.

6. The composition according to any of the preceding claims, wherein the weight ratio of the total amount of cationic polyelectrolyte and anionic polyelectrolyte to the amount of mineral salt selected from the group consisting of alkaline metal or alkaline earth metal halogenides, is comprised between 0.10 and 4.0, preferably between 0.50 and 2.50, more preferably between 0.80 and 1.50.

7. The composition according to any of the preceding claims, having a water content of from 15 to 80 % by weight, preferably of from 20 to 75 % by weight, more preferably of from 25 to 70 % by weight.

8. The composition according to any of the preceding claims, wherein the amount of particular filler is comprised between 5 % and 80 % by weight, preferably between 10 and 70 % by weight, more preferably between 15 and 60 % by weight, with respect to the total dry weight of the composition.

9. The composition according to any of the preceding claims, wherein the particulate filler is a mineral filler, preferably selected from calcium carbonate, barium sulfate, clay, talcum, dolomite, mica, silica sand, crushed basalt, kaolin, wollastonite, and laponite.

10. The composition according to any of the preceding claims, wherein the polyphenols comprise at least two, preferably at least three, more preferably at least four polyhydroxylated aromatic ring structures.

11. The composition according to any of the preceding claims, wherein the polyphenol is tannic acid.

12. The composition according to any of the preceding claims, further comprising particles of organic polymer, the organic polymer preferably being selected from acrylic polymers, styrene-acrylic polymers, styrene-butadiene polymers, chloroprene, natural rubber and polyurethanes, and the ratio of the amount of organic polymer to the total amount of cationic and anionic polyelectrolytes being comprised between 0.5/1 and 5/1, preferably between 0.7 and 2.5, more preferably between 1.0 and 2.0.

13. The composition according to any of the preceding claims, further comprising an emulsion of a hydrophobic additive selected from paraffin wax, polyethylene wax, polypropylene wax, silicone wax and poly(tetrafluoroethylene) wax.

14. A method of waterproofing a support, comprising the following successive steps:
- coating the support with a liquid composition according to any of claims 1 - 13, thereby forming a liquid coating layer,
- applying water to the liquid coating layer, thereby instantly hardening the liquid coating layer by dissolving the mineral salt from the liquid coating layer,
- optionally removing the excess water with dissolved mineral salt from the hardened coating layer, and
- drying the hardened coating layer.

15. A method of repairing an underwater leakage due to an opening in a separation between two compartments, said method comprising completely filling the opening with a composition according to any of claims 1 to 16, and contacting the composition with water, either after or during the filling of the opening with the composition.

16. A method of underwater gluing two substrates together, said method comprising injecting a composition according to any of claims 1 - 13 in a space between two immerged substrates that are to be adhered to each other.

17. A method of underwater gluing two substrates together, said method comprising applying a composition according to any of the claims 1 - 13 onto a surface of a first substrate and then pressing the surface with the composition against an immerged second substrate.
